(19) Europäisches Patentamt
European Patent Office
Office européen des brevets

(11) **EP 2 734 556 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(21) Anmeldenummer: **12733164.3**

(22) Anmeldetag: **10.07.2012**

(51) Int Cl.:
*C08F 216/02* (2006.01)      *C08F 222/06* (2006.01)
*C08F 2/38* (2006.01)      *C11D 3/37* (2006.01)

(86) Internationale Anmeldenummer:
**PCT/EP2012/063499**

(87) Internationale Veröffentlichungsnummer:
**WO 2013/013971 (31.01.2013 Gazette 2013/05)**

(54) **VERFAHREN ZUR HERSTELLUNG VON MALEINSÄURE-ISOPRENOL-COPOLYMEREN**

PROCESS FOR PRODUCING MALEIC ACID-ISOPRENOL COPOLYMERS

PROCÉDÉ DE PRODUCTION DE COPOLYMÈRES ACIDE MALÉIQUE-ISOPRÉNOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2011 EP 11175022**

(43) Veröffentlichungstag der Anmeldung:
**28.05.2014 Patentblatt 2014/22**

(73) Patentinhaber: **BASF SE**
**67056 Ludwigshafen (DE)**

(72) Erfinder:
- **DETERING, Jürgen**
  **67117 Limburgerhof (DE)**
- **GÄDT, Torben**
  **83278 Traunstein (DE)**
- **NIED, Stephan**
  **67435 Neustadt/Wstr. (DE)**
- **KEMPTER, Andreas**
  **67433 Neustadt (DE)**

(56) Entgegenhaltungen:
**EP-A2- 0 396 303      US-A- 5 135 677**

**Beschreibung**

Die Erfindung betrifft ein Verfahren zur Herstellung von Maleinsäure-Isoprenol-Copolymeren, die Copolymere selbst sowie deren Verwendung.

Die Löslichkeit der meisten Stoffe in Wasser ist begrenzt. Insbesondere in der industriellen Wasserbehandlung ist die Verhinderung mineralischer Ablagerungen in wasserführenden Systemen eine essentielle Aufgabe. Anorganische Stoffe und Salze wie Calcium- und Magnesiumcarbonat, Magnesiumhydroxid, Calcium- und Bariumsulfat und Calciumphosphat besitzen in Wasser eine geringe Löslichkeit. Kommt es zu einer Aufkonzentration dieser gelösten Inhaltsstoffe in wässrigen Systemen (Eindickung), so wird das Löslichkeitsprodukt überschritten mit der Folge, dass diese Stoffe ausfallen und Ablagerungen verursachen. Die Löslichkeit der Stoffe ist zusätzlich abhängig von der Temperatur und dem pH-Wert. Insbesondere weisen viele Stoffe wie Calciumcarbonat, Calciumsulfat oder Magnesiumhydroxid eine inverse Löslichkeit auf, d.h. ihre Löslichkeit sinkt mit zunehmender Temperatur. Dies führt dazu, dass hohe Prozesstemperaturen häufig die Ursache für unerwünschte Ausfällungen und Belagsbildungen in Kühl- und Kesselspeisewassersystemen, auf Wärmeübertragungsflächen oder in Rohrleitungen sind.

Ausfällungen und Ablagerungen anorganischer Stoffe und Salze in wasserführenden Systemen sind nur mit großem Aufwand wieder zu entfernen. Jede mechanische und chemische Reinigung ist kosten- und zeitintensiv und führt unweigerlich zu Produktionsausfällen.

Nicht nur in Kühl- und Kesselspeisewassersystemen wird versucht, die Bildung von Calciumcarbonat, Calciumsulfat, Magnesiumhydroxid- und anderen Salzbelägen zu vermeiden. Auch in der Meerwasserentsalzung durch Destillation und durch Membranverfahren wie Umkehrosmose oder Elektrodialyse ist man bestrebt, diese festen Beläge nicht entstehen zu lassen. Insbesondere in thermischen Meerwasserentsalzungsanlagen spielen beide Effekte, nämlich einerseits Aufkonzentration durch Verdampfen von Wasser und andererseits hohe Verfahrenstemperaturen, eine bedeutende Rolle.

Die Produktivität von Entsalzungsanlagen ist dabei beschränkt durch die obere Verfahrenstemperatur. Es ist wünschenswert, Meerwasserentsalzungsanlagen bei möglichst hoher Verdampfungstemperatur zu betreiben, um eine möglichst hohe Prozesseffizienz zu erreichen und die benötigte Energie zur Produktion von Frischwasser zu minimieren. Zur Charakterisierung der Prozesseffizienz nutzt man die Kenngröße $kWh/m^3$ Wasser. Diese Kenngröße kann durch möglichst hohe Prozesstemperaturen für die Verfahren der mehrstufigen Entspannungsverdampfung und der Mehreffekt-Verdampfung minimiert werden. Die maximale Prozesstemperatur in diesen Prozessen wird vor allem begrenzt durch die mit steigender Temperatur immer stärker zunehmende Belagsbildung. Es ist bekannt, dass insbesondere die Ablagerung von basischen Magnesiumsalzen wie Magnesiumhydroxid (Brucit) und Magnesiumcarbonathydroxid (Hydromagnesit), sowie Calciumcarbonat und Calciumsulfat in thermischen Entsalzungsanlagen eine kritische Rolle spielen.

Es ist bekannt, dass mittels radikalischer Polymerisation hergestellte niedermolekulare Polyacrylsäuren und ihre Salze aufgrund ihrer dispergierenden und das Kristallwachstum inhibierenden Eigenschaften Verwendung als Belagsverhinderer in der industriellen Wasserbehandlung und bei der Meerwasserentsalzung finden. Für eine gute Wirkung sollte das Molekulargewichtsmittel ($M_w$) dieser Polymere < 50 000 sein. Oft werden Polyacrylsäuren mit $M_w$ < 10 000 als besonders effektiv beschrieben. Nachteil dieser Polymere ist ihre mit steigender Temperatur wachsende Härteempfindlichkeit, d.h. die Gefahr, dass die Polymere als Ca- oder Mg-Polyacrylate ausfallen, nimmt zu. Weiterhin besitzen die Polyacrylsäuren nur eine sehr geringe inhibierende Wirkung gegenüber Ablagerungen aus Brucit oder Hydromagnesit.

Als Alternative zu Polyacrylaten kommen Polymaleate in Betracht.

EP-A 337 694 betrifft die Herstellung vom Maleinsäurepolymeren mit einem zahlenmittleren Molekulargewicht $M_n$ von 300 - 5000 und einer Polydispersität von < 2,5 aus 50 bis 99,9 Gew.-% Maleinsäure und 50 bis 0,1 Gew.-% eines wasserlöslichen ungesättigten Comonomeren, sowie deren Verwendung für die Wasserbehandlung. Ausdrücklich genannt werden die Verwendung als Antiscalant und als Builder in Waschmittelformulierungen. Als Comonomere werden u. a. ungesättigte Monocarbonsäuren wie Acrylsäure und Methacrylsäure, ungesättigte Dicarbonsäuren wie Fumarsäure und Itaconsäure, ungesättigte Alkohole wie Isoprenol, (Meth)allylether und ungesättigte Sulfonsäuregruppen enthaltende Verbindungen wie Vinylsulfonsäure und 2-Acrylamido-2-methylpropansulfonsäure beschrieben. Die Copolymere werden durch wässrige Polymerisation mit $H_2O_2$ als Initiator in Gegenwart von 0,5 bis 500 ppm eines Metallkatalysators umfassend Eisen-, Kupfer- oder Vanadiumionen beschrieben. Es wird kein Regler verwendet. Während der Polymerisation wird Kohlendioxid freigesetzt, wobei die Menge an Kohlendioxid proportional zur Menge an $H_2O_2$ ist. In den Beispielen werden Maleinsäure-Isoprenol-Copolymere hergestellt, wobei die Polymerisation am Siedepunkt der wässrigen Monomerlösung durchgeführt wird. Es werden gewichtsmittlere Molekulargewichte zwischen 1090 und 4780 berichtet, die gegen Polyethylenglykol-Standards bestimmt wurden.

EP-A 396 303 betrifft die Herstellung von Maleinsäurepolymeren aus 75 bis 100 Gew.-% Maleinsäure und 0 bis 25 Gew.-% eines weiteren wasserlöslichen Monomeren durch wässrige Polymerisation mit 12 bis 150 g $H_2O_2$ pro Mol der Monomerkomponenten, 0,3 bis 500 ppm eines Metallsalzes von Eisen, Vanadium oder Kupfer und einer alkalischen Substanz wie Alkalimetallhydroxid oder Alkalimetallcarbonat, um bis zu 45 Gew.- % Monomere mit sauren Gruppen zu neutralisieren. Als Comonomere werden u. a. ungesättigte Monocarbonsäuren wie Acrylsäure und Methacrylsäure, ungesättigte Dicarbonsäuren wie Fumarsäure und Itaconsäure, ungesättigte Alkohole wie Isoprenol, (Meth)allylether und ungesättigte Sulfonsäuregruppen enthaltende Verbindungen wie Vinylsulfonsäure und 2-Acrylamido-2-methylpröpansulfonsäure beschrieben. Es wird kein Regler verwendet. Die Polymerisationstemperatur soll im Bereich von 85 bis 160 °C liegen. In den Beispielen werden Copolymere aus 80 Gew.-% Maleinsäure und 20 Gew.-% Isoprenol mit zahlenmittleren Molekulargewichten zwischen 2400 und 4100 hergestellt. Die Polymerisation wird am Siedepunkt des Monomergemischs durchgeführt. Beschrieben wird die Verwendung der Copolymere als Waschmittelbuilder und Antiscalant.

EP-A 302 406 beschreibt die alternierende 1:1-Copolymerisation von Isoprenolacetat mit Maleinsäureanhydrid und weiteren Maleinsäurederivaten in organischen Lösungsmitteln wie Cylclohexan oder Diethylether. Die Polymerisationstemperatur beträgt 60 °C, als Initiator wird Azo-bis-(isobutyronitril) (AIBN) verwendet. Die minimale Polymerisationsdauer beträgt 5 Stunden für Maleinsäureanhydrid und Isoprenolacetat aus Cylcohexan. Die erhaltenen Molgewichte liegen zwischen 5600 bis 190 000 g/mol. Die Polymere werden als Schmelzklebstoffe und Wasserabsorber verwendet.

Aufgabe der Erfindung ist es, Polymere mit verbesserter belagsinhibierender Wirkung, die insbesondere Ausfällungen und Ablagerungen von Calciumcarbonat, Calciumsulfat und basischen Magnesiumsalzen in wasserführenden Systemen wirksam verhindern, sowie ein Verfahren zu ihrer Herstellung bereitzustellen.

Gelöst wird die Aufgabe durch ein Verfahren zur Herstellung von Maleinsäure-Isoprenol-Copölymeren aus

a) 30 bis 80 Gew.-% Maleinsäure,

b) 5 bis 60 Gew.-% Isoprenol,

c) 0 bis 30 Gew.-% eines oder mehrerer weiterer ethylenisch ungesättigter Monomere,

bei dem Maleinsäure, Isoprenol und gegebenenfalls das weitere ethylenisch ungesättigte Monomer in Gegenwart eines redoxchemischen Radikalstarters und eines Reglers bei einer Temperatur im Bereich von 10 bis 80 °C polymerisiert werden. Maleinsäure kann auch als Maleinsäureanhydrid eingesetzt werden.

Gelöst wird die Aufgabe auch durch die so erhältlichen Maleinsäure-Isoprenol-Copolymeren selbst sowie durch deren Verwendung als Belagsinhibitoren in wasserführenden Systemen.

Überraschenderweise wurde gefunden, dass Copolymere aus Maleinsäure und Isoprenol, welche durch redoxchemisch initiierte Polymerisation bei niedrigen Temperaturen von 10 bis 80°C hergestellt werden, besonders gut geeignet sind, die Bildung von basischen Magnesiumsalzbelägen sowie Calciumcarbonat- und Calciumsulfat-Belägen zu verhindern.

Vorzugsweise weisen die erhaltenen Maleinsäure-Isoprenol-Copolymere ein gewichtsmittleres Molekulargewicht im Bereich von 3 000 bis 20 000 g/mol auf. Ihr Isoprenolgehalt liegt zwischen 5 und 60 Gew.-%. Die erfindungsgemäßen Copolymere zeichnen sich insbesondere dadurch aus, dass sie durch ein besonders mildes Polymerisationsverfahren erhalten werden, bei dem es nicht zu Nebenreaktionen wie der Isomerisierung von Isoprenol zu Prenol oder Dimethylvinylcarbinol, der Bildung von 3-Methyl-1,3-butandiol oder Isopren oder zur Decarboxylierung von Maleinsäure kommt.

Bekannte Verfahren zur Herstellung von Maleinsäure-Isoprenol-Copolymeren beruhen auf einer radikalischen Polymerisation bei erhöhten Temperaturen um 100°C. Es ist bekannt, dass insbesondere Isoprenol unter sauren Bedingungen und hohen Temperaturen rasch einem chemischen Abbau unterliegt (F. Lynen, Liebigs Ann. Chem. 1960, 360, 58 bis 70). Dagegen ermöglicht das erfindungsgemäße Verfahren eine wesentlich mildere Polymerisationsreaktion bei Temperaturen zwischen 10 bis 80 °C. So wird ein Abbau des Isoprenols effektiv unterbunden. Bevorzugt wird die Polymerisation bei 10 bis 70 °C, besonders bevorzugt bei 10 bis 60 °C durchgeführt.

Das erfindungsgemäße Verfahren erlaubt die Herstellung von Maleinsäure-Isoprenol-Copolymeren unter Verwendung von Reglern. Damit kann das gewünschte Molekulargewicht in einem Bereich von 3 000 bis 20 000 g/mol eingestellt werden. Im Allgemeinen beträgt das gewichtsmittlere Molekulargewicht der Isoprenol-Maleinsäure Copolymere 3 000 bis 20 000 g/mol, bevorzugt 3 500 bis 14 000 g/mol und besonders bevorzugt 4 000 bis 10 000 g/mol und insbesondere 4 000 bis 8 000 g/mol.

Das Molekulargewicht wird mittels Gelpermeationschromatographie gegen Polyacrylsäurestandards ermittelt, deren Molekulargewichtsverteilung mittels Lichtstreuung absolut bestimmt wurde.

Im Allgemeinen beträgt der Polydispersitätsindex des Maleinsäure-Isoprenol-Copolymers $M_w/M_n \leq 2{,}5$, bevorzugt $\leq 2$.

Im Allgemeinen umfasst der redoxchemische Initiator ein Peroxid und ein Reduktionsmittel.

Geeignete Peroxide sind beispielsweise Wasserstoffperoxid, Natrium-, Kalium- oder Ammoniumperoxodisulfat, tert.-Butylhydroperoxid, Dibenzoylperoxid und Cumylhydroperoxid. In einer bevorzugten Ausführungsform umfasst der Initiator Wasserstoffperoxid. Wasserstoffperoxid wird im Allgemeinen als wässrige Lösung, beispielsweise mit einem Wasserstoffperoxid-Gehalt von 30 Gew.-%, eingesetzt.

Geeignete Reduktionsmittel sind beispielsweise Eisen(II)-Salze, Natriumhydroxymethansulfinat (beispielsweise als Rongalit oder Brüggolit SFS erhältlich), Natrium-2-hydroxy-2-sulfinatoessigsäure (beispielsweise als Brüggolit FF06 erhältlich), Ascorbinsäure, Alkalimetallsulfite und Alkalimetallmetabisulfite, Natriumhypöphosphit und Thioharnstoff. In einer bevorzugten Ausführungsform umfasst der Initiator als Reduktionsmittel Natriumhydroxymethansulfinat oder Natrium-2-hydroxy-2-sulfinatoessigsäure.

In einer weiteren Ausführungsform umfasst der Initiator zusätzlich zu dem Peroxid und dem Reduktionsmittel ein Eisensalz.

In einer besonders bevorzugten Ausführungsform umfasst der redoxchemische Initiator Wasserstoffperoxid, ein Eisensalz sowie ein Reduktionsmittel.

Als Regler geeignet sind anorganische Schwefelverbindungen wie Hydrogensulfite, Disulfite und Dithionite, organische Sulfide, Sulfoxide, Sulfone und Mercaptoverbindungen wie Mercaptoethanol, Mercaptoessigsäure sowie anorganische Phosphorverbindungen wie Hypophosphorige Säure (Phosphinsäure) und ihre Salze, z.B. Natriumhypophosphit.

In einer bevorzugten Ausführungsform enthält der Regler eine Mercaptoverbindung, insbesondere Mercaptoethanol.

Das erfindungsgemäße Verfahren wird im Allgemeinen halbkontinuierlich in Zulauffahrweise durchgeführt. Als Lösemittel wird im Allgemeinen Wasser verwendet. Dieses ist zumindest teilweise in der Vorlage enthalten.

In einer Variante sind Maleinsäure sowie optional ein Teil des Isoprenols in der Vorlage enthalten und wird zumindest ein Teil des Isoprenols als Zulauf zugegeben. Maleinsäure kann auch als Maleinsäureanhydrid eingesetzt werden. In einer speziellen Variante wird die gesamte Isoprenol-Menge als Zulauf zugegeben.

Isoprenol kann auch vollständig in der Vorlage enthalten sein. In einer weiteren speziellen Variante sind sowohl Maleinsäure als auch Isoprenol vollständig in der Vorlage enthalten. Maleinsäure kann auch als Maleinsäureanhydrid eingesetzt werden.

Bevorzugt enthalten die erfindungsgemäßen Copolymere a) 35 bis 75 Gew.-% Maleinsäure und b) 15 bis 50 Gew.-% Isoprenol, und c) 0 bis 30 Gew.-% eines weiteren ethylenisch ungesättigten Monomeren.

In einer Ausführungsform der Erfindung enthalten die Copolymere a) 50 bis 75 Gew.-%, bevorzugt 55 bis 75 Gew.-% Maleinsäure, und b) 25 bis 50 Gew.-%, vorzugsweise 25 bis 45 Gew.-% Isoprenol und kein weiteres ethylenisch ungesättigtes Monomer. Gewichtsangaben beziehen sich auf die freie Säure. Maleinsäure kann aber auch in Form ihrer Salze vorliegen.

Das Maleinsäure-Isoprenol-Copolymer kann bis zu 30 Gew.-%, bevorzugt bis zu 25 Gew.-%, besonders bevorzugt bis zu 20 Gew.-%, bezogen auf alle ethylenisch ungesättigten Monomere, ein oder mehrere weitere ethylenisch ungesättigte Monomere einpolymerisiert enthalten. Beispiele für geeignete ethylenisch ungesättigte Comonomere sind Acrylsäure, Methacrylsäure, Vinylsulfonsäure, Allylsulfonsäure und 2-Acrylamido-2-methylpropansulfonsäure. Gewichtsangaben beziehen sich auf die freien Säuren. Die Comonomere können auch in Form ihrer Salze vorliegen.

In einer Ausführungsform der Erfindung enthält das Copolymer als weiteres Monomer Acrylsäure, vorzugsweise in Mengen von 5 bis 25 Gew.-%. In einer weiteren Ausführungsform der Erfindung enthält das Copolymer als weiteres Monomer 2-Acrylamido-2-methylpropansulfonsäure, vorzugsweise in Mengen von 5 bis 25 Gew.-%.

In einer speziellen Ausführungsform der Erfindung enthalten die Copolymere a) 35 bis 75 Gew.-%, bevorzugt 35 bis 60 Gew.-% Maleinsäure, und b) 15 bis 50 Gew.-%, vorzugsweise 20 bis 45 Gew.-% Isoprenol und c) 2 bis 30, bevorzugt 5 bis 25 Gew.-% eines weiteren ethylenisch ungesättigten Monomeren, insbesondere Acrylsäure und/oder 2-Acrylamido-2-methylpropansulfonsäure.

Das weitere ungesättigte Monomer c) kann sowohl in der Vorlage enthalten sein als auch als Zulauf zugegeben werden. Im Allgemeinen wird zumindest ein Teil des weiteren Monomeren c) als Zulauf zugegeben. In einer Variante wird die Gesamtmenge des weiteren Monomeren c) als Zulauf zugegeben.

Der Regler kann in der Vorlage enthalten sein oder als Zulauf zugegeben werden. Im Allgemeinen wird zumindest ein Teil des Reglers als Zulauf zugegeben.

Das Reduktionsmittel kann in der Vorlage enthalten sein oder als Zulauf zugegeben werden. Im Allgemeinen wird zumindest ein Teil des Reduktionsmittels als Zulauf zugegeben. Das Peroxid kann in der Vorlage enthalten sein oder als Zulauf zugegeben werden. In einer Variante ist das gesamte Peroxid in der Vorlage enthalten. In einer weiteren Variante wird zumindest ein Teil des Peroxids als Zulauf zugegeben. Bevorzugt wird das gesamte Wasserstoffperoxid als Zulauf zugegeben.

Insbesondere werden Wasserstoffperoxid, Reduktionsmittel und Regler zumindest teilweise und als mehrere getrennte Zuläufe zugegeben.

In einer bevorzugten Ausführungsform umfasst der redoxchemische Initiator neben Wasserstoffperoxid und dem Reduktionsmittel ein Eisensalz. Dieses ist vorzugsweise vollständig in der Vorlage enthalten.

Das Polymerisationsgemisch kann zur Neutralisation von Maleinsäure oder von weiteren ethylenisch ungesättigten Monomeren mit sauren Gruppen Alkalilauge enthalten. Die Alkalilauge kann vollständig in der Vorlage enthalten oder zumindest teilweise als Zulauf zugegeben werden. Vorzugsweise ist die zur Teilneutralisation von Maleinsäure eingesetzte Natronlauge vollständig in der Vorlage enthalten. Wird ein weiteres ethylenisch ungesättigtes Monomer c) mit sauren Gruppen als Zulauf zugegeben, wird im Allgemeinen auch Alkalilauge mit dem Zulauf zugegeben.

Insbesondere wird die Polymerisation in wässriger Lösung mit einem Monomerengehalt von 25 bis 50 Gew.-% durchgeführt. Dabei wird die radikalische Polymerisation unter sauren Bedingungen durchgeführt, im Allgemeinen bei einem pH-Wert von 0,5 bis 6,5.

Besonders bevorzugt wird die Polymerisation bei Temperaturen ≤ 60 °C durchgeführt. Insbesondere bevorzugt sind Polymerisationstemperaturen ≤ 50 °C.

Wasserführende Systeme, in denen die Maleinsäure-Isoprenol-Copolymere verwendet werden können, sind insbesondere Meerwasser-Entsalzungsanlagen, Brackwasser-Entsalzungsanlagen, Kühlwassersysteme und Kesselspeisewassersysteme.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP), Diethylentriaminpenta(methylenphosphonsäure) (DTPMP) und Ethylendiamintetra(methylenphophonsäure) (EDTMP), die in Säureform oder in Form ihrer Natriumsalze verwendet werden.

Die Erfindung wird durch die nachstehenden Beispiele näher erläutert.

Beispiele

Die Bestimmung der mittleren Molekulargewichte erfolgte mittels GPC.

| | |
|---|---|
| Gerät: | Waters Alliance 2690 mit UV-Detektor (Waters 2487) und RI-Detektor (Waters 2410) |
| Säulen: | Shodex OHpak SB 804HQ and 802.5HQ (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 mL/min |
| Temperatur: | 50°C |
| Injektion: | 50 bis 100 $\mu$L |
| Detektion: | RI und UV |

Molekulargewichte der Polymere wurden mit zwei unterschiedlichen Kalibrierungen bestimmt. Erstens erfolgte die Bestimmung relativ zu Polyethylenglykol-Standards der Firma PSS Polymer Standards Service GmbH, zweitens relativ zu Polyacrylsäure- Standards der Firma Varian Inc. Die Molekulargewichtsverteilungskurven der Polyethylenglykolstandards und der Polyacrylsäurestandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol. Die Massen der Polyacrylsäurestandards betrugen 115 000, 47 500, 28 000, 16 000, 7 500, 4 500, 4 100, 2 925, 1 250 g/mol.

Zum Vergleich wird in den Tabellen 1 und 2 auch das gegen Polyethylenglykol-Standards bestimmte gewichtsmittlere Molekulargewicht angegeben. Polyethylenglykol ist wegen seines nichtionischen Charakters als Standard weniger geeignet als Polyacrylsäure und ergibt verglichen mit Polyacrylsäure systematisch höhere Molekulargewichte.

Synthesebeispiele

Beispiel 1

Ein 1 L-Doppelwandreaktor mit mechanischem Rührwerk wird mit 196 g Maleinsäureanhydrid, 112 g Isoprenol, 40 mg Eisensulfat-Heptahydrat ($FeSO_4 x 7H_2O$) und 400 g Wasser befüllt. Daraufhin werden 8 g einer 50 gew.-%igen Natronlauge zugegeben. Die vorgelegte Lösung wird durch einen externen Thermostaten auf 10 °C abgekühlt. Im Reaktionsgemisch eingetaucht sind Sensoren für Temperatur und pH-Wert. Sobald die Reaktionsmischung 10 °C erreicht hat, werden drei getrennte Zuläufe gestartet: 1) 10 g Rongalit in 90 g Wasser, 2) 25 g einer 30 gew.-%igen wässrigen Wasserstoffperoxidlösung, 3) 2 g 2-Mercaptoethanol in 25 g Wasser. Zulauf 1) wird mit einer Geschwindigkeit von 40 mL/h über 60 Minuten dosiert. Zulauf 2) wird über 30 Minuten mit einer Geschwindigkeit von 45 mL/h dosiert und Zulauf 3) wird über 60 Minuten mit einer Geschwindigkeit von 27 mL/h dosiert.

Man erhält eine niedrigviskose, klare Lösung mit leicht gelblicher Farbe und einem pH-Wert von 1,8. Der Feststoffgehalt der Lösung beträgt 40% und das Molekulargewicht $M_w$ (GPC gegen Polyacrylsäurestandards) beträgt 11000 g/mol.

Beispiel 2

Ein 1 L-Doppelwandreaktor mit mechanischem Rührwerk wird mit 196 g Maleinsäureanhydrid, 112 g Isoprenol, 4 g 2-Mercaptoethanol, 40 mg Eisensulfat-Heptahydrat ($FeSO_4x7H_2O$) und 400 g Wasser befüllt. Daraufhin werden 8 g einer 50 gew.-%igen Natronlauge zugegeben. Die vorgelegte Lösung wird durch einen externen Thermostaten auf 10 °C abgekühlt. Im Reaktionsgemisch eingetaucht sind Sensoren für Temperatur und pH-Wert. Sobald die Reaktionsmischung 10 °C erreicht hat, werden drei Zuläufe gestartet: 1) 10 g Rongalit in 90 g Wasser, 2) 25 g einer 30%igen wässrigen Wasserstoffperoxidlösung, 3) 8 g 2-Mercaptoethanol in 25 g Wasser. Zulauf 1) wird mit einer Geschwindigkeit von 40 mL/h über 50 Minuten dosiert, Zulauf 2) wird über 30 Minuten mit einer Geschwindigkeit von 45 mL/h dosiert und Zulauf 3) wird über 50 Minuten mit einer Geschwindigkeit von 33 mL/h dosiert.

Man erhält eine niedrigviskose, klare Lösung mit leicht gelblicher Farbe und einem pH-Wert von 1,9. Der Feststoffgehalt der Lösung beträgt 43% und das Molekulargewicht $M_w$ (GPC gegen Polyacrylsäurestandards) beträgt 6000 g/mol.

Beispiel 3

Ein 1 L-Doppelwandreaktor mit mechanischem Rührwerk wird mit 196 g Maleinsäureanhydrid, 129 g Isoprenol, 40 mg Eisensulfat-Heptahydrat ($FeSO_4x7H_2O$) und 400 g Wasser befüllt. Daraufhin werden 8 g einer 50 gew.-%igen Natronlauge zugegeben. Die vorgelegte Lösung wird durch einen externen Thermostaten auf 10 °C abgekühlt. Im Reaktionsgemisch eingetaucht sind Sensoren für Temperatur und pH-Wert. Sobald die Reaktionsmischung 10 °C erreicht hat, werden drei Zuläufe gestartet: 1) 10 g Rongalit in 90 g Wasser, 2) 25 g einer 30 gew.-%igen wässrigen Wasserstoffperoxidlösung, 3) 6 g 2-Mercaptoethanol in 25 g Wasser. Zulauf 1) wird mit einer Geschwindigkeit von 40 mL/h über 60 Minuten dosiert, Zulauf 2) wird über 30 Minuten mit einer Geschwindigkeit von 45 mL/h dosiert und Zulauf 3) wird über 60 Minuten mit einer Geschwindigkeit von 31 mL/h dosiert.

Man erhält eine niedrigviskose, klare Lösung mit leicht gelblicher Farbe und einem pH-Wert von 1,9. Der Feststoffgehalt der Lösung beträgt 42% und das Molekulargewicht $M_w$ (GPC gegen Polyacrylsäurestandards) beträgt 7500 g/mol.

Beispiel 4

Ein 0,5L-Doppelwandreaktor mit mechanischem Rührwerk wird mit 98 g Maleinsäureanhydrid, 65 g Isoprenol, 1 g 2-Mercaptoethanol, 20 mg Eisensulfat-Heptahydrat ($FeSO_4x7H_2O$) und 200 g Wasser befüllt. Daraufhin werden 4 g einer 50 gew.-%igen Natronlauge zugegeben. Die vorgelegte Lösung wird durch einen externen Thermostaten auf 10 °C abgekühlt. Im Reaktionsgemisch eingetaucht sind Sensoren für Temperatur und pH-Wert. Sobald die Reaktionsmischung 10 °C erreicht hat, werden drei Zuläufe gestartet: 1) 5 g Rongalit in 45 g Wasser, 2) 12,5 g einer 30 gew.-%igen wässrigen Wasserstoffperoxidlösung, 3) 9 g 2-Mercaptoethanol in 10 g Wasser. Zulauf 1) wird mit einer Geschwindigkeit von 20 mL/h über 50 Minuten dosiert Zulauf 2) wird über 30 Minuten mit einer Geschwindigkeit von 22,5 mL/h dosiert und Zulauf 3) wird über 50 Minuten mit einer Geschwindigkeit von 19 mL/h dosiert.

Man erhält eine niedrigviskose, klare Lösung mit leicht gelblicher Farbe und einem pH-Wert von 2,2. Der Feststoffgehalt der Lösung beträgt 44 Gew.-% und das Molekulargewicht $M_w$ (GPC gegen Polyacrylsäurestandards) beträgt 4000 g/mol.

Beispiel 5

Ein 1 L-Doppelwandreaktor mit mechanischem Rührwerk wird mit 196 g Maleinsäureanhydrid, 1 g 2-Mercaptoethanol, 40 mg Eisensulfat-Heptahydrat ($FeSO_4x7H_2O$) und 400 g Wasser befüllt. Diese Lösung wird durch einen externen Thermostaten auf 10 °C abgekühlt. Im Reaktionsgemisch eingetaucht sind Sensoren für Temperatur und pH-Wert. Sobald die Reaktionsmischung 10 °C erreicht hat, werden 40 g einer 30 gew.-%igen wässrigen Lösung von Wasserstoffperoxid zugegeben. Anschließend werden drei Zuläufe gestartet: 1) 10 g Rongalit in 90 g Wasser, 2) 172 g Isoprenol, 3) 3 g 2-Mercaptoethanol in 25 g Wasser. Zulauf 1) wird mit einer Geschwindigkeit von 40 mL/h über 80 Minuten dosiert, Zulauf 2) wird über 50 Minuten mit einer Geschwindigkeit von 242 mL/h dosiert und Zulauf 3) wird über 60 Minuten mit einer Geschwindigkeit von 28 mL/h dosiert.

Man erhält eine niedrigviskose, klare Lösung mit leicht gelblicher Farbe und einem pH-Wert von 1,9. Der Feststoffgehalt der Lösung beträgt 38% und das Molekulargewicht $M_w$ (GPC gegen Polyacrylsäurestandards) beträgt 5450 g/mol.

Beispiel 6

Ein 0,5L-Doppelwandreaktor mit mechanischem Rührwerk wird mit 34 g Maleinsäureanhydrid, 43 g Isoprenol, 0,25 g 2-Mercaptoethanol, 10 mg Eisensulfat-Heptahydrat ($FeSO_4$x$7H_2O$) und 70 g Wasser befüllt. Daraufhin werden 1,5 g einer 50%igen Natronlauge zugegeben. Diese Lösung wird durch einen externen Thermostaten auf 20 °C abgekühlt. Im Reaktionsgemisch eingetaucht sind Sensoren für Temperatur und pH-Wert. Sobald die Reaktionsmischung 20 °C erreicht hat, werden 10 g einer 30 gew.-%igen wässrigen Lösung von Wasserstoffperoxid zugegeben. Anschließend werden drei Zuläufe gestartet: 1) 5 g Rongalit in 45 g Wasser, 2) eine Mischung aus 28 g 90 gew.-%iger Acrylsäure, 30 g Wasser und 1,5 g 50% Natronlauge, 3) 3,75 g 2-Mercaptoethanol in 15 g Wasser. Zulauf 1) wird mit einer Geschwindigkeit von 15 mL/h über 70 Minuten dosiert, Zulauf 2) wird über 60 Minuten mit einer Geschwindigkeit von 56 mL/h dosiert und Zulauf 3) wird über 60 Minuten mit einer Geschwindigkeit von 19 mL/h dosiert.

Man erhält eine niedrigviskose, klare Lösung mit leicht gelblicher Farbe und einem pH Wert von 2,0. Der Feststoffgehalt der Lösung beträgt 43% und das Molekulargewicht $M_w$ (GPC gegen Polyacrylsäurestandards) beträgt 4000 g/mol.

Beispiel 7

Ein 0,5L-Doppelwandreaktor mit mechanischem Rührwerk wird mit 49 g Maleinsäureanhydrid, 49 g Isoprenol, 0,25 g 2-Mercaptoethanol, 10 mg Eisensulfat Heptahydrat ($FeSO_4$x$7H_2O$) und 100 g Wasser befüllt. Daraufhin werden 4 g einer 50 gew.-%igen Natronlauge zugegeben. Diese Lösung wird durch einen externen Thermostaten auf 20 °C abgekühlt. Im Reaktionsgemisch eingetaucht sind Sensoren für Temperatur und pH-Wert. Sobald die Reaktionsmischung 20 °C erreicht hat, werden vier Zuläufe gestartet: 1) 5 g Rongalit in 45 g Wasser, 2) 7 g einer 30 gew.-%igen wässrigen Wasserstoffperoxidlösung, 3) 2 g 2-Mercaptoethanol in 10 g Wasser, 4) 49 g einer 50 gew.-%igen wässrigen 2-Acrylamido-2-methylpropansulfonsäure (AMPS)-Lösung. Zulauf 1) wird mit einer Geschwindigkeit von 10 mL/h über 40 Minuten dosiert, Zulauf 2) wird über 30 Minuten mit einer Geschwindigkeit von 12,6 mL/h dosiert, Zulauf 3) wird über 30 Minuten mit einer Geschwindigkeit von 12 mL/h dosiert, und Zulauf 4) wird über 20 Minuten mit einer Geschwindigkeit von 123 mL/h dosiert.

Man erhält eine niedrigviskose, klare Lösung mit leicht gelblicher Farbe und einem pH Wert von 2,6. Der Feststoffgehalt der Lösung beträgt 43% und das Molekulargewicht (GPC gegen Polyacrylsäurestandards) beträgt 7000 g/mol.

Vergleichsbeispiel A

Ein 500 mL-Doppelwandreaktor mit mechanischem Rührwerk wird mit 98 g Maleinsäureanhydrid, 23 mg Eisensulfat Heptahydrat ($FeSO_4$x$7H_2O$) und 38 g Wasser befüllt. Danach wird die Reaktionsmischung auf 90°C erwärmt, wobei die Temperatur und der pH-Wert über Sensoren kontinuierlich aufgezeichnet werden. Nachdem die Temperatur der Reaktionsmischung 90 °C erreicht hat, werden zwei Zuläufe gleichzeitig gestartet. Zulauf 1 besteht aus 86 g Isoprenol und wird mit einer Geschwindigkeit von 34 mL/h über 180 Minuten zudosiert. Zulauf 2 besteht aus einer 30 gew.-% wässrigen Lösung von Wasserstoffperoxid und wird mit einer Geschwindigkeit von 23 mL/h über 180 Minuten zudosiert. Anschließend wird die Reaktionsmischung für weitere 60 Minuten bei 90 °C gehalten.

Man erhält eine leicht viskose, intensiv gelb-orange Lösung mit einem pH-Wert von 2,8. Der Feststoffgehalt der Lösung beträgt 62% und das Molekulargewicht (GPC) beträgt 2500 g/mol.

Vergleichsbeispiel B (entsprechend Beispiel 9 der EP-A 396 303)

Ein 500 mL-Doppelwandreaktor mit mechanischem Rührwerk wird mit 98 g Maleinsäureanhydrid, 23 mg Eisensulfat-Heptahydrat ($FeSO_4$x$7H_2O$) und 38 g Wasser befüllt. Danach wird die Reaktionsmischung auf 90 °C erwärmt, wobei die Temperatur und der pH-Wert über Sensoren kontinuierlich aufgezeichnet werden. Nachdem die Temperatur der Reaktionsmischung 90 °C erreicht hat, werden zwei Zuläufe gleichzeitig gestartet. Zulauf 1 besteht aus 34 g Isoprenol und wird mit einer Geschwindigkeit von 13 mL/h über 180 Minuten zudosiert. Zulauf 2 besteht aus einer 30 gew.-%igen wässrigen Lösung von Wasserstoffperoxid und wird mit einer Geschwindigkeit von 23 mL/h über 180 Minuten zudosiert. Anschließend wird die Reaktionsmischung für weitere 60 Minuten bei 90 °C gehalten.

Man erhält eine leicht viskose, intensiv gelb-orange Lösung mit einem pH-Wert von 2,4. Der Feststoffgehalt der Lösung beträgt 55% und das Molekulargewicht (GPC) beträgt 2000 g/mol.

Vergleichsbeispiel C (Polyacrylsäure C)

In einem Reaktor wurden 304,0 g VE-Wasser zusammen mit 1,84 g einer 50 gew.-%igen wässrigen Lösung von Phosphoriger Säure vorgelegt und unter Stickstoff-Atmosphäre auf 98 °C Innentemperatur erwärmt. Bei dieser Temperatur wurden gleichzeitig 461,0 g einer destillierten Acrylsäure, 132,0 g einer 7 gew.-%igen wässrigen Natriumperoxodisulfat-Lösung und 196,0 g einer 40 gew.-%igen wässrigen Natriumbisulfit-Lösung separat und parallel unter Rühren zudosiert. Acrylsäure wurde innerhalb von 4 Stunden, Natriumperoxodisulfat innerhalb von 4,25 Stunden und Natriumbisulfit innerhalb von 3,75 Stunden zudosiert. Nach Ende des Acrylsäure-Zulaufs wurden 496,0 g einer 50 gew.-%igen wässrigen Natriumhydroxid-Lösung innerhalb von 1 Stunde bei 98 °C Innentemperatur zugegeben, und es wurde noch 1 Stunde bei 98 °C nachpolymerisiert. Danach wurde die Polymer-Lösung auf Raumtemperatur abgekühlt. Man erhielt eine leicht viskose klare Polymerlösung mit einem pH-Wert von 6,9 und einem Feststoffgehalt von 43,5 %. Das gewichtsmittlere Molekulargewicht (Mw) beträgt 4450 g/mol,

**Verwendung der Copolymere als Belagsinhibitoren**

Die Polymerlösungen wurden mit verdünnter NaOH auf pH 7 eingestellt.

Beispiel 8

Calciumcarbonat-Inhibierungstest

Eine Lösung aus $NaHCO_3$, $Mg_2SO_4$, $CaCl_2$ und Copolymer wird 2 h bei 70 °C und einem pH-Wert von 8,0 bis 8,5 im Wasserbad geschüttelt. Nach Filtration der noch warmen Lösung über einen 0,45 $\mu$m Milexfilter wird der Ca-Gehalt des Filtrats komplexometrisch oder mittels einer $Ca^{2+}$-selektiven Elektrode ermittelt und durch Vergleich vorher/nachher die $CaCO_3$-Inhibierung in % gemäß nachstehender Formel ermittelt. Die Konzentrationen der verschiedenen Ionen und des Copolymers sind wie folgt

| | |
|---|---|
| $Ca^{2+}$ | 215 mg/L |
| $Mg^{2+}$ | 43 mg/L |
| $HCO_3^-$ | 1220 mg/L |
| $Na^+$ | 460 mg/L |
| $Cl^-$ | 380 mg/L |
| $SO_4^{2-}$ | 170 mg/L |
| Polymer | 3 mg/L |

$$CaCO_3\text{- Inhibierung (\%)} = \frac{mg\ (Ca^{2+})\ \text{nach 24 h} - mg\ (Ca^{2+})\ \text{Blindwert nach 24 h}}{mg\ (Ca^{2+})\ \text{Nullwert} - mg\ (Ca^{2+})\ \text{Blindwert nach 24 h}} \times 100$$

Die Ergebnisse sind in Tabelle 1 wiedergegeben

Tabelle 1

| Beispiel | Gewichtsverhältnis MS : Isoprenol | Mw [g/mol] (a) | Mw [g/mol] (b) | CaCO$_3$-Inhibierung % |
|---|---|---|---|---|
| 1 | 68 : 32 | 11000 | 26700 | 61,3 |
| 2 | 68 : 32 | 6000 | 17300 | 67,3 |
| 3 | 64 : 36 | 7500 | 22500 | 67,0 |
| 4 | 64 : 36 | 4000 | 10700 | 56,7 |
| 5 | 57 : 43 | 5500 | 12000 | 68,9 |
| Vergleichsbeispiele | | | | |
| A | 57 : 43 | 2500 | 4900 | 46,7 |

(fortgesetzt)

| Beispiel | Gewichtsverhältnis MS : Isoprenol | Mw [g/mol] (a) | Mw [g/mol] (b) | CaCO₃-Inhibierung % |
|---|---|---|---|---|
| B | 77 : 23 | 2000 | 4100 | 51,0 |
| C Polyacrylsäure C | - | 4500 | | 60,0 |
| (a) bestimmt mittels GPC gegen Polyacrylsäure-Standards (b) bestimmt mittels GPC gegen Poly(ethylenglykol)-Standards MS = Maleinsäure | | | | |

Beispiel 9

Versuche zur Inhibierung von basischen Mg-Salzablagerungen nach der DSL-Methode

Die belagsinhibierende Wirkung der erfindungsgemäßen Copolymeren wird mit Hilfe einer modifizierten Version des "Differential Scale Loop (DSL)" Gerätes von PSL Systemtechnik durchgeführt. Hierbei handelt es sich um ein "Tube Blocking System" als vollautomatisierte Laboranlage zur Untersuchung von Ausfällungen und Ablagerungen von Salzen in Pipelines und Wasserrohrleitungen. In diesem Gerät wird in modifizierter Betriebsweise eine Magnesiumchlorid-Lösung A mit einer Natriumhydrogencarbonat-Lösung B, die das zu testende Polymer enthält, bei einer Temperatur von 120 °C und einem spezifischen Druck von 2 bar an einem Mischpunkt im Volumenverhältnis 1:1 zusammengemischt und durch eine Testkapillare aus Edelstahl bei konstanter Temperatur mit konstanter Flussrate gepumpt. Hierbei wird der Differenzdruck zwischen Mischpunkt (Kapillaranfang) und Kapillarende bestimmt. Ein Anstieg des Differenzdrucks deutet auf eine Belagsbildung durch basische Magnesiumsalze (Hydromagnesit, Brucit) innerhalb der Kapillare hin. Die Zeit, die bis zu einem Druckanstieg von definierter Höhe (0,1 bar) gemessen wird, ist ein Maß für die belagsinhibierende Wirkung des eingesetzten Polymers.

Die Versuchsbedingungen sind:

Lösung A: 100mM MgCl₂
Lösung B: 200 mM NaHCO₃
Konzentration des Polymers nach Mischen von A und B: 10 mg/l
Kapillarlänge: 2,5 m
Kapillardurchmesser: 0,88 mm
Kapillarmaterial: Edelstahl
Temperatur: 120 °C
Gesamtdurchflußrate: 5 ml/min
Systemdruck: 2 bar
Druckanstieg-Schwellenwert: 0,1 bar

Die Ergebnisse sind in Tabelle 2 zusammengefasst. Es wird jeweils der Mittelwert aus 4 Einzelmessungen wiedergegeben.

Tabelle 2

| Beispiel | MS : Isoprenol | Mw g/mol (a) | Mw g/mol (b) | Zeit [min] |
|---|---|---|---|---|
| ohne Polymer | | | | 4,5 |
| 1 | 68 : 32 | 11000 | 26700 | 30,2 |
| 3 | 64 : 36 | 7500 | 22500 | 41,1 |
| 4 | 64 : 36 | 4000 | 10700 | 21,2 |
| 5 | 57 : 43 | 5500 | 12000 | 40,8 |
| | MS : AS : Isoprenol | | | |
| 6 | 37 : 23 : 40 | 4000 | 9200 | 28,4 |
| | MS : Isoprenol : AMPS | | | |

(fortgesetzt)

| Beispiel | MS : Isoprenol | Mw g/mol (a) | Mw g/mol (b) | Zeit [min] |
|---|---|---|---|---|
| 7 | 44 : 37 : 19 | 7000 | 12700 | 37,6 |
| Vergleichsbeispiele | MS : Isoprenol | | | |
| A | 57 : 43 | 2500 | 4900 | 18,5 |
| B | 77 : 23 | 2000 | 4100 | 13,4 |
| C Polyacrylsäure C | | 4500 | | 7,1 |
| (a) bestimmt mittels GPC gegen Polyacrylsäure-Standards<br>(b) bestimmt mittels GPC gegen Poly(ethylenglykol)-Standards<br>MS = Maleinsäure<br>AS = Acrylsäure<br>AMPS = 2-Acrylamido-2-methylpropansulfonsäure | | | | |

**Patentansprüche**

1. Verfahren zur Herstellung von Maleinsäure-Isoprenol-Copolymeren aus

    a) 30 bis 80 Gew.-% Maleinsäure,
    b) 5 bis 60 Gew.-% Isoprenol,
    c) 0 bis 30 Gew.-% eines oder mehrerer weiterer ethylenisch ungesättigter Monomere,

    bei dem Maleinsäure, Isoprenol und gegebenenfalls das weitere ethylenisch ungesättigte Monomer in Gegenwart eines redoxchemischen Initiators und eines Reglers bei einer Temperatur im Bereich von 10 bis 80 °C polymerisiert werden.

2. Verfahren nach Anspruch 1, **dadurch gekennzeichnet, dass** der redoxchemische Initiator ein Peroxid und ein Reduktionsmittel umfasst.

3. Verfahren nach Anspruch 2, **dadurch gekennzeichnet, dass** der redoxchemische Initiator zusätzlich ein Eisensalz umfasst.

4. Verfahren nach Anspruch 2 oder 3, **dadurch gekennzeichnet, dass** der redoxchemische Initiator als Peroxid Wasserstoffperoxid umfasst.

5. Verfahren nach einem der Ansprüche 2 bis 4, **dadurch gekennzeichnet, dass** der redoxchemische Initiator als Reduktionsmittel Natriumhydroxymethansulfinat oder Natrium-2-hydroxy-2-sulfinatoessigsäure umfasst.

6. Verfahren nach einem der Ansprüche 2 bis 5, **dadurch gekennzeichnet, dass** der Regler eine Mercaptoverbindung umfasst.

7. Verfahren nach einem der Ansprüche 1 bis 6, **dadurch gekennzeichnet, dass** das Verfahren halbkontinuierlich in Zulauffahrweise durchgeführt wird, wobei Maleinsäure sowie optional ein Teil des Isoprenols in der Vorlage enthalten und zumindest ein Teil des Isoprenols als Zulauf zugegeben wird.

8. Verfahren nach einem der Ansprüche 1 bis 6, **dadurch gekennzeichnet, dass** Maleinsäure und Isoprenol vollständig in der Vorlage enthalten sind.

9. Verfahren nach Anspruch 7 oder 8, **dadurch gekennzeichnet, dass** zumindest ein Teil des weiteren ethylenisch ungesättigten Monomeren als Zulauf zugegeben wird.

10. Verfahren nach einem der Ansprüche 7 bis 9, **dadurch gekennzeichnet, dass** zumindest ein Teil des Reglers als Zulauf zugegeben wird.

**11.** Verfahren nach einem der Ansprüche 7 bis 10, **dadurch gekennzeichnet, dass** zumindest ein Teil des Reduktionsmittels als Zulauf zugegeben wird.

**12.** Verfahren nach einem der Ansprüche 7 bis 11, **dadurch gekennzeichnet, dass** zumindest ein Teil des Peroxids als Zulauf zugegeben wird.

**13.** Verfahren nach einem der Ansprüche 7 bis 12, **dadurch gekennzeichnet, dass** ein Eisensalz in der Vorlage enthalten ist.

**14.** Maleinsäure-Isoprenol-Copolymere, erhältlich nach einem Verfahren gemäß einem der Ansprüche 1 bis 13.

**15.** Verwendung der Maleinsäure-Isoprenol-Copolymere nach Anspruch 14 als Belagsinhibitoren in wasserführenden Systemen.

**16.** Verwendung nach Anspruch 15 in Meerwasser-Entsalzungsanlagen, Brackwasser-Entsalzungsanlagen, Kühlwassersystemen und Kesselspeisewassersystemen.


**Claims**

**1.** A process for preparing maleic acid-isoprenol copolymers from

a) 30% to 80% by weight of maleic acid,
b) 5% to 60% by weight of isoprenol,
c) 0% to 30% by weight of one or more further ethylenically unsaturated monomers,

which comprises polymerizing maleic acid, isoprenol and optionally the further ethylenically unsaturated monomer in the presence of a redox initiator and of a chain transfer agent at a temperature in the range from 10 to 80°C.

**2.** The process according to claim 1 wherein the redox initiator comprises a peroxide and a reducing agent.

**3.** The process according to claim 2 wherein the redox initiator further comprises an iron salt.

**4.** The process according to claim 2 or 3 wherein the redox initiator comprises hydrogen peroxide.

**5.** The process according to any one of claims 2 to 4 wherein the redox initiator comprises sodium hydroxymethanesulfinate or sodium 2-hydroxy-2-sulfinatoacetic acid as reducing agent.

**6.** The process according to any one of claims 2 to 5 wherein the chain transfer agent comprises a mercapto compound.

**7.** The process according to any one of claims 1 to 6 wherein the process is carried out semicontinuously in a feed stream addition operation wherein maleic acid and also optionally some of the isoprenol is present in the initial charge and at least some of the isoprenol is added as a feed stream.

**8.** The process according to any one of claims 1 to 6 wherein maleic acid and isoprenol are fully included in the initial charge.

**9.** The process according to claim 7 or 8 wherein at least some of the further ethylenically unsaturated monomer is added as a feed stream.

**10.** The process according to any one of claims 7 to 9 wherein at least some of the chain transfer agent is added as a feed stream.

**11.** The process according to any one of claims 7 to 10 wherein at least some of the reducing agent is added as a feed stream.

**12.** The process according to any one of claims 7 to 11 wherein at least some of the peroxide is added as a feed stream.

13. The process according to any one of claims 7 to 12 wherein an iron salt is included in the initial charge.

14. A maleic acid-isoprenol copolymer obtainable by a process according to any one of claims 1 to 13.

15. The use of the maleic acid-isoprenol copolymer according to claim 14 as a scale inhibitor in a water-carrying system.

16. The use according to claim 15 in seawater desalination systems, brackish water desalination systems, cooling water systems and boiler feed water systems.

**Revendications**

1. Procédé de fabrication de copolymères d'acide maléique-isoprénol à partir de

   a) 30 à 80 % en poids d'acide maléique,
   b) 5 à 60 % en poids d'isoprénol,
   c) 0 à 30 % en poids d'un ou de plusieurs monomères éthyléniquement insaturés supplémentaires,

   selon lequel l'acide maléique, l'isoprénol et éventuellement le monomère éthyléniquement insaturé supplémentaire sont polymérisés en présence d'un initiateur redox chimique et d'un régulateur à une température dans la plage allant de 10 à 80 °C.

2. Procédé selon la revendication 1, **caractérisé en ce que** l'initiateur redox chimique comprend un peroxyde et un réducteur.

3. Procédé selon la revendication 2, **caractérisé en ce que** l'initiateur redox chimique comprend en outre un sel de fer.

4. Procédé selon la revendication 2 ou 3, **caractérisé en ce que** l'initiateur redox chimique comprend du peroxyde d'hydrogène en tant que peroxyde.

5. Procédé selon l'une quelconque des revendications 2 à 4, **caractérisé en ce que** l'initiateur redox chimique comprend de l'hydroxyméthanesulfinate de sodium ou de l'acide 2-hydroxy-2-sulfinatoacétique de sodium en tant que réducteur.

6. Procédé selon l'une quelconque des revendications 2 à 5, **caractérisé en ce que** le régulateur comprend un composé mercapto.

7. Procédé selon l'une quelconque des revendications 1 à 6, **caractérisé en ce que** le procédé est réalisé de manière semi-continue en mode d'alimentation, l'acide maléique et éventuellement une partie de l'isoprénol étant contenus dans la charge initiale et au moins une partie de l'isoprénol étant ajoutée en tant qu'alimentation.

8. Procédé selon l'une quelconque des revendications 1 à 6, **caractérisé en ce que** l'acide maléique et l'isoprénol sont contenus en totalité dans la charge initiale.

9. Procédé selon la revendication 7 ou 8, **caractérisé en ce qu'**au moins une partie du monomère éthyléniquement insaturé supplémentaire est ajoutée en tant qu'alimentation.

10. Procédé selon l'une quelconque des revendications 7 à 9, **caractérisé en ce qu'**au moins une partie du régulateur est ajoutée en tant qu'alimentation.

11. Procédé selon l'une quelconque des revendications 7 à 10, **caractérisé en ce qu'**au moins une partie du réducteur est ajoutée en tant qu'alimentation.

12. Procédé selon l'une quelconque des revendications 7 à 11, **caractérisé en ce qu'**au moins une partie du peroxyde est ajoutée en tant qu'alimentation.

13. Procédé selon l'une quelconque des revendications 7 à 12, **caractérisé en ce qu'**un sel de fer est contenu dans la charge initiale.

14. Copolymères d'acide maléique-isoprénol, pouvant être obtenus par un procédé selon l'une quelconque des revendications 1 à 13.

15. Utilisation des copolymères d'acide maléique-isoprénol selon la revendication 14 en tant qu'inhibiteurs de dépôt dans des systèmes de conduction d'eau.

16. Utilisation selon la revendication 15 dans des unités de dessalage d'eau de mer, des unités de dessalage d'eau saumâtre, des systèmes d'eau de refroidissement et des systèmes d'eau d'alimentation de chaudière.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 337694 A
- EP 396303 A
- EP 302406 A

**In der Beschreibung aufgeführte Nicht-Patentliteratur**

- **F. LYNEN.** *Liebigs Ann. Chem.,* 1960, vol. 360, 58-70